# EUROPÄISCHE PATENTSCHRIFT

(11) **EP 1 266 920 B1**
(45) Veröffentlichungstag und Bekanntmachung des Hinweises auf die Patenterteilung: **26.04.2006**
(21) Anmeldenummer: 02012361.8
(22) Anmeldetag: 06.06.2002
(51) Int. Cl.: C08G 59/18

(54) **Wasserverdünnbare Aminhärter für wässrige Zweikomponenten-Epoxidharz-Systeme**
Water-thinnable amine curing agents for aqueous epoxy resins with two coponent
Durcisseurs d'amine diluables dans l'eau pour des résines époxydes aqueuses à deux composants

(30) Priorität: 15.06.2001 DE 10128889
(43) Veröffentlichungstag der Anmeldung: 18.12.2002
(73) Patentinhaber: Cytec Surface Specialties Austria GmbH, 8402 Werndorf (AT)
(72) Erfinder: Gerlitz, Martin, Dr., 8041 Graz (AT); Fischer, Thomas, 8010 Graz (AT); Gollner, Andreas, 8054 Graz (AT); Gogg, Manfred, 8501 Lieboch (AT); Prucher, Elfriede, 8046 Graz (AT); Schneeberger, Heike, 8430 Leibnitz (AT); Wenzl, Josef, 8563 Ligist 11 (AT)
(74) Vertreter: Deckers, Hellmuth Alexander

(56) Entgegenhaltungen:
- EP-A- 0 567 831
- DE-A- 19 630 277
- US-A- 4 089 826
- US-A- 5 350 784

## Beschreibung

Die Erfindung betrifft wasserverdünnbare Aminhärter für wäßrige Zweikomponenten-Epoxidharz-Systeme.

In den US-Patentschriften 4,246,148 und 4,608,405 werden wasserverdünnbare Härter für Epoxidharze für die Härtung bei Raumtemperatur beschrieben, die durch mehrstufige Umsetzung hergestellt werden, wobei aus einem aromatischen Diglycidyläther, gegebenenfalls einem Diglycidyläther eines aliphatischen Diols und einem aromatischen Polyol in Gegenwart eines geeigneten Katalysators ein lineares Diepoxid aufgebaut wird, dessen Epoxidgruppen anschließend vollständig mit einem Polyamin umgesetzt werden. Alle verbleibenden primären Aminogruppen dieses Epoxid/Amin-Addukts werden danach mit einem Monoepoxid oder einer Monocarbonsäure zur Reaktion gebracht, um die Gebrauchsdauer der Härter zu verlängern. Diese Härter haben jedoch mehrere gravierende Nachteile: Zur Herstellung der Härter müssen vorzugsweise organische Lösungsmittel verwendet werden, die im Endprodukt verbleiben; und die Wasserverdünnbarkeit der Härter wird durch (zumindest teilweise) Neutralisation der Aminogruppen mit organischen Monocarbonsäuren erzielt, die erst bei der Härtung bei höherer Temperatur aus dem Film entweichen. Die wasserverdünnbaren Härter haben demnach ionische Struktur und sind deshalb zum Beispiel schlecht mit nichtionisch stabilisierten wäßrigen Epoxidharzen kompatibel.

Die in den zitierten US-Patentschriften beschriebenen Härter weisen von ihrer Synthese her nur sekundäre Aminogruppen auf. Gegenüber Härtern, die zusätzlich auch primäre Aminogruppen enthalten, sind diese weniger reaktiv; dadurch wird die Vernetzungsdichte erniedrigt, was nachteilige Auswirkungen auf die technologischen Eigenschaften (z. B. Härte, Beständigkeit, Abriebfestigkeit) der Epoxidharzbeschichtungen hat.

In dem Dokument EP 0 567 831 A1 werden Härtungsmittel für wäßrige Epoxidharzemulsionen beschrieben, die Massenanteile enthalten von 10 % bis 80 % mindestens eines Emulgators, 1 % bis 80 % mindestens eines Coemulgators, und 5 % bis 80 % mindestens eines Bis(diamin)-diepoxidadduktes, sowie gegebenenfalls noch 0 % bis 80 % eines Diamins oder eines Gemisches aus mehreren Diaminen.

In der Patentanmeldung DE 196 30 277 A1 werden Härter für wäßrige Epoxidharzsysteme mit Topfzeitanzeige beschrieben, die hergestellt werden durch Umsetzung von (A) einer Mischung von zwei oder mehreren aliphatischen Polyolen mit einer gewichtsmittleren molaren Masse M_{w} der Mischung von 200 g/mol bis 20 000 g/mol mit (B) mindestens einer Epoxidverbindung mit mindestens zwei Epoxidgruppen pro Molekül und einem spezifischen Epoxidgruppengehalt von 500 mmol/kg bis 10 000 mmol/kg in einem ersten Reaktionsschritt zu einem Epoxid-Polyoladdukt, welches anschließend mit Polyaminen mit mindestens einer primären Aminogruppe und mindestens drei Aminwasserstoffatomen pro Molekül reagiert wird. Dabei weist mindestens ein Polyol der Polyolmischung (A) eine gewichtsmittlere molare Masse M_{w} von mindestens 4000 g/mol auf, und ist in dieser Mischung mit einem Massenanteil von mindestens 1 % enthalten, und mindestens ein Polyol der Mischung weist eine gewichtsmittlere molare Masse M_{w} von weniger als 4000 g/mol auf und ist in der Polyolmischung mit einem Massenanteil von bis zu 99 % in dieser Mischung enthalten.

In dem Patent US 5,350,784 werden wasserdispergierbare Polyamin-Epoxid-Addukte und diese enthaltende Beschichtungszusammensetzungen beschrieben, wobei der Emulgator für den Härter durch Reaktion von einem Polyamin mit primären Aminogruppen und einer Mischung aus Mono- und Polyepoxiden hergestellt wird, und dabei die Mengen von Mono- und Polyepoxid so gewählt werden, daß das Monoepoxid mit 10 % bis 50 % der primären Aminogruppen, und das Polyepoxid mit 5 % bis 65 % der primären Aminogruppen reagiert.

Aus dem US-Patent 4,089,826 sind Härtungsmittel für Epoxidharze bekannt, die eine Mischung sind aus (A) einem Addukt eines Polyäthylenamins oder eines Polypropylenamins mit einem aliphatischen oder aromatischen Diglycidyläther, und (B) einem Aminoalkohol mit mindestens zwei aliphatischen Aminwasserstoffatomen, insbesondere einem Addukt eines Polyaminoamids mit bestimmten Monoepoxiden.

In der EP-A 0 000 605 sind Härtungsmittel ABC für wäßrige Epoxidharz-Dispersionen offenbart, die erhalten werden, indem man ein Addukt A aus mindestens einer Polyepoxidverbindung a1 und mindestens einem Polyalkylenäther-Polyol a2 mit einer mittleren molaren Masse von 200 bis 10 000 g/mol durch Umsetzung im Äquivalentverhältnis (Verhältnis der Anzahl der Epoxidgruppen in a1 zur Anzahl der Hydroxylgruppen in a2) von *N*(EP) : N(OH) = 2 : (0,1 bis 1,5) mit einem Polyamin oder Polyamingemisch B in 2- bis 10-fachem Überschuß der Anzahl der N-H-Gruppen, bezogen auf die Anzahl der verbliebenen reaktiven Epoxidgruppen, umsetzt. Hierbei sind an die reaktiven Gruppen des Polyamins B noch zur Addition befähigte ungesättigte Verbindungen C wie (Meth-)Acrylsäure, deren Ester oder Amide oder Acrylnitril addiert.

Diese lösungsmittelfreien, nichtionischen Härtungsmittel für wäßrige Epoxidharze haben hervorragende technologische Eigenschaften, jedoch sind wäßrige verdünnte Lösungen dieser Aminhärter bereits bei leicht erhöhten Temperaturen, z. B. bei über 40 °C, instabil und separieren in zwei Phasen, was die Verarbeitung beeinträchtigt.

Außerdem können die an die reaktiven Gruppen des Polyamins addierten ungesättigten Verbindungen, insbesondere bei höheren Temperaturen, im Rahmen einer Retro-Michael-Addition als solche freigesetzt werden. Da die eingesetzten ungesättigten Verbindungen toxikologisch nicht unbedenklich sind, sind dadurch Applikationen bei höheren Temperaturen stark eingeschränkt. Ohne die Umsetzung der Amine B mit den ungesättigten Verbindungen C vor ihrer Addition an die epoxidfunktionellen Verbindungen A ist allerdings die nutzbare Zeit des Einsatzes (Topfzeit, "pot-life") der mit den Härtern ABC und wäßrigen, polyfunktionellen Epoxidharz-Dispersionen hergestellten Beschichtungssysteme zu gering.

Es besteht daher das Bedürfnis, diese Nachteile der in EP-A 0 000 605 beschriebenen Härter bei Erhalt oder Verbesserung der sonstigen anwendungstechnischen Eigenschaften zu eliminieren.

Aus der EP-A 0 707 609 sind wäßrige Härter für wäßrige Epoxidharze bekannt, die durch Reaktion von Alkylenpolyaminen mit weniger als 12 Kohlenstoffatomen, aromatischen Monoglycidyläthern und Diglycidyläthern hergestellt werden.

Polyamine, die prinzipiell als Härtungsmittel verwendet werden können, sind als Härter in wäßrigen Systemen nicht geeignet, da sie im allgemeinen gut wasserlöslich sind, also leicht wäßrige Lösungen bilden, und zum Beispiel wäßrige Epoxidharzdispersionen unter Phasentrennung brechen. Emulsionen von nicht wasserlöslichen Aminen beeinträchtigen üblicherweise die Stabilität der Epoxidharz-Dispersionen nicht, sind aber dann als Härter zu wenig reaktiv.

Es besteht daher die Aufgabe, Aminhärter für wäßrige Epoxidharzdispersionen bereitzustellen, die einerseits die Stabilität der Dispersion des Harzes nicht nachteilig beeinflussen, andererseits aber eine genügend hohe Reaktivität als Härter aufweisen.

Eine Lösung ist die Bereitstellung von Amine enthaltenden Emulsionen, wobei reaktive, ansonsten wasserlösliche Amine hydrophobiert werden, d.h. geeigneten chemischen Umsetzungen unterworfen werden, um weniger oder gar nicht wasserlösliche Reaktionsprodukte zu erhalten. Dabei darf die Reaktivität der Amine als Härter nicht über Gebühr verringert werden. Die hydrophobierten Amine werden mit geeigneten Emulgatorharzen in der wäßrigen Phase emulgiert.

Die Modifikation der Amine kann ausgehend von einem als Härter geeigneten organischen Amin durch Additions- oder Kondensationsreaktionen sowie durch Substitution des organischen Restes erfolgen.

Gegenstand der vorliegenden Erfindung sind wasserverdünnbare Aminhärter **H** für wäßrige Epoaridharz-Dispersionen, dadurch gekennzeichnet, daß sie eine Kombination eines Addukts **ABC** mit einem Emulgator **DEFG** enthalten, wobei das Addukt **ABC** in Wasser unlöslich ist und erhältlich ist durch eine mindestens zweistufige Umsetzung eines Polyepoxids **A,** das gegebenenfalls durch Umsetzung mit einem Polyalkylenäther-Polyol A2 modifiziert sein kann, mit
I. einem Umsetzungsprodukt aus einem Amin **B** und einem Monoepoxid **C,** oder
II. einem Amin **B** und anschließende Umsetzung mit einem Monoepoxid **C,**
wobei die Menge an Amin **B** so gewählt ist, daß die Anzahl der an Stickstoff gebundenen H-Atome die Anzahl der Epoxidgruppen in **A** um das 2- bis 10-fache übertrifft, und der Emulgator **DEFG** erhältlich ist durch Umsetzung von Di- oder Polyepoxiden F mit gegenüber Epoxiden mindestens difunktionellen Verbindungen **E,** gegebenenfalls mit gegenüber Epoxiden monofunktionellen Verbindungen **D,** und Aminen **G,** die mindestens eine tertiäre und mindestens eine primäre oder mindestens eine tertiäre und mindestens zwei sekundäre Aminogruppen aufweisen.

Der spezifische Gehalt an Aminwasserstoffatomen in **ABC** beträgt bevorzugt 3 bis 8 mol/kg, insbesondere 3,5 bis 7 mol/kg, und besonders bevorzugt 4,0 bis 6,0 mol/kg.

Der Massenanteil an Emulgatorharz DEFG, bezogen auf die Summe der Massen der gelösten oder dispergierten Harze (Härter ABC und Emulgator DEFG) liegt bevorzugt zwischen 10 und 40 %.

Bei der Herstellung des Addukts **ABC** ist es im Rahmen der Erfindung auch möglich, im ersten Schritt die Umsetzung von **A** mit einem Umsetzungsprodukt eines Teils C1 der Epoxidkomponente C und dem Amin **B** vorzunehmen, und im zweiten Schritt die Umsetzung dieses Produkts mit dem restlichen Epoxid C2 vorzunehmen, wobei sich die chemische Natur der ersten (C1) und zweiten (C2) Portion der Epoxidkomponente **C** auch unterscheiden kann.

Bei den 1,2-Epoxidverbindungen entsprechend A handelt es sich um Polyepoxide mit im Mittel mehr als einer, vorzugsweise mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen und/oder andere funktionelle Gruppen enthalten, die unter den Mischungs- oder Reaktionsbedingungen keine störenden Nebenreaktionen verursachen, beispielsweise Alkyl- oder Arylsubstituenten, Äthergruppierungen und ähnliche. Geeignet sind zum Beispiel die Epoxide mehrfach ungesättigter Kohlenwasserstoffe (z. B. Vinylcyclohexen, Dicyclopentadien, Cyclohexadien, Cyclododecadien, Isopren, Butadien, 1,5-Hexadien, Polybutadien, Divinylbenzole und dergleichen), Oligomere des Epichlorhydrins u. ä., S- und N-haltige Epoxide (N,N-Diglycidylanilin, N,N'-Dimethyldiglycidyl-4,4-diaminodiphenylmethan) sowie Epoxide, welche nach üblichen Verfahren aus mehrfach ungesättigten Carbonsäuren oder einfach ungesättigten Carbonsäureestern ungesättigter Alkohole hergestellt worden sind, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind sowie Polyglycidylester von Polycarbonsäuren, die man durch Umsetzung von Epichlorhydrin oder ähnlichen Epoxidverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierten Fettsäuren wie dimerisierter Linolensäure, erhält (z. B. Adipinsäurediglycidylester, Phthalsäurediglycidylester und Hexahydrophthalsäurediglycidylester). Insbesondere geeignet sind die Glycidyläther mehrwertiger Phenole oder Alkohole, wie z. B. Bisphenol A - Diglycidyläther, Bisphenol F - Diglycidyläther, die Diglycidyläther von Bisphenol S (Dihydroxydiphenylsulfon), Dihydroxydiphenyl und Dihydroxydiphenyläther, sowie Neopentylglykol-Diglycidyläther, 1,4-Butandiol-Diglycidyläther, und 1,6-Hexandiol-Diglycidyläther.

Gegebenenfalls werden die Epoxide **A** vor ihrer Umsetzung mit dem Amin **B** oder dem Reaktionsprodukt von Amin **B** und Epoxidkomponente **C** noch durch Reaktion mit Polyalkylenpolyäthern A2 modifiziert. Die Komponente A2 darf jedoch nur in solchen Mengen eingesetzt werden, daß das Addukt **ABC** nicht alleine wasserlöslich oder wasserdispergierbar wird. Der Einfachheit halber wird im folgenden auch das durch Reaktion mit A2 modifizierte Epoxid als "A" bezeichnet.

Die Polyalkylenäther-Polyole A2 genügen der Formel HO-(R-O-)ₙ-H, wobei R ein Alkylenrest mit 2 bis 6, insbesondere 2 bis 4 Kohlenstoffatomen ist, und n eine ganze Zahl von 2 bis 200, insbesondere von 5 bis 100. Bevorzugt sind die Alkylenreste 1,2-Äthylen-, 1,2-Propylen- und 1,4-Butylenreste, wobei diese auch in Mischung im selben Molekül vorliegen können; ebenso ist es möglich, Gemische von unterschiedlichen Polyalkylenäthern mit unterschiedlichen Resten R und/oder unterschiedlichen Werten für n einzusetzen. Besonders bevorzugt werden Polyäthylenglykol mit n = 4 bis 40, Polypropylenglykole sowie Misch- oder Block-Mischpolymere mit diesen Bausteinen.

Die Umsetzung der Epoxidverbindungen A und der Polyalkylenäther-Polyole A2 wird üblicherweise durch Lewis-Säuren wie Bortrifluorid oder dessen Komplexen mit tertiären Aminen katalysiert.

Die Amine B weisen bevorzugt mindestens zwei primäre und/oder sekundäre Aminogruppen im Molekül auf, wobei die Aminogruppen insbesondere jeweils an aliphatische Kohlenstoffatome gebunden sind. Bevorzugt sind Diamine, sowohl cyclische und alicyclische Diamine wie meta-Xylylendiamin oder dessen Hydrierungsprodukt 1,3-Bis-(aminomethyl)-cyclohexan, und Isophorondiamin, verzweigte aliphatische Amine wie 2,2,4- und 2,4,4-Trimethylhexan-1,6-diamin, besonders bevorzugt sind lineare aliphatische Amine mit 2 bis 18 Kohlenstoffatomen. Insbesondere geeignet sind α,ω-Alkylendiamine wie Äthylendiamin, 1,3-Diaminopropan, 1,4-Diaminobutan und 1,6-Diaminohexan, Bis(3-aminopropyl)amin, Bis(4-aminobutyl)amin und Bis(6-aminohexyl)amin sowie die oligomeren Polyäthylen-Imine wie Diäthylentriamin, Triäthylentetramin und Tetraäthylenpentamin.

Als Monoepoxidkomponente C eignen sich besonders Epoxide von Monoolefinen wie Buten-1, Hexen-1, Cyclopenten und Cyclohexen, Glycidyläther von einwertigen Alkoholen wie Äthanol, n-Butanol, n-Hexanol, 2-Äthylhexanol, Decylalkohol, Glycidylester von linearen und verzweigten aliphatischen Carbonsäuren mit 2 bis 20 Kohlenstoffatomen wie Glycidylacetat, Glycidylneopentanoat, Glycidyl-2-äthylhexanoat, Glycidylneodecanoat sowie die kommerziell erhältlichen Gemische von Glycidylestern von in α-Stellung stark verzweigten aliphatischen Monocarbonsäuren, die beispielsweise unter dem Handelsnamen ®Cardura E 10 angeboten werden. Die genannten Glycidylester sowie die Glycidyläther von n-Butanol, n-Hexanol und 2-Äthylhexanol sind besonders bevorzugt.

Gemäß der Variante **I** kann die Umsetzung des Epoxids bzw. des Addukts A mit dem Reaktionsprodukt aus **B und** C erfolgen; es ist auch möglich, gemäß der Variante II das Epoxid bzw. das Addukt **A** zunächst mit dem Amin **B** zu einem Addukt **AB** umzusetzen, bis alle Epoxidgruppen von **A** verbraucht sind, und anschließend das Epoxid C hinzuzugeben. Es ist, wie oben bereits angeführt, natürlich auch möglich, einen Teil C1 der Epoxidkomponente C mit dem Amin **B** umzusetzen, dies Zwischenprodukt **C1B** dann unter Verbrauch aller Epoxidgruppen in **A** mit diesem umzusetzen zu dem Zwischenprodukt **C1BA** und anschließend den Rest C2 der Epoxidkomponente C zuzugeben und zu reagieren, wobei die Epoxidverbindungen C1 und C2 gleich oder verschieden sein können oder Mischungen unterschiedlicher Zusammensetzung sind.

Das Addukt **ABC** ist durch die Umsetzung weniger hydrophil als das Amin B, insbesondere ist es in Wasser nicht mehr löslich. Als nicht löslich wird hier eine Verbindung bezeichnet, deren Konzentration in der wäßrigen Phase nach Einstellung des Gleichgewichts mit der 10fachen Masse an Wasser bei 20 °C weniger als 0,5 g in 100 g der Lösung beträgt.

Das Addukt **ABC** wird in der wäßrigen Phase dispergiert unter Zusatz eines Dispergiermittels oder Emulgators **DEFG,** herstellbar durch Umsetzung von Di- oder Polyepoxiden **F** mit mindestens zwei reaktiven Epoxidgruppen pro Molekül, gegenüber Epoxiden durch ringöffnende Addition monofunktionelle Verbindungen **D** (auch als "Kettenstopper" bezeichnet), in derselben Reaktion difunktionelle Verbindungen **E** (auch als "Kettenverlängerer" bezeichnet), wobei die Anwesenheit der Verbindungen **D** fakultativ ist, und Aminen **G,** die mindestens eine tertiäre Aminogruppe und mindestens eine primäre oder mindestens zwei sekundäre Aminogruppen aufweisen. Das Amin **G** muß also mindestens zwei Aminwasserstoffatome aufweisen. Durch Umsetzung von **E** und F bzw. gemeinsame oder sequentielle Umsetzung von **D, E** und **F** in der ersten Stufe werden in einer Advancement-Reaktion monofunktionelle Epoxide der Struktur E-(F-E)n- F bzw. D-(F-E)ₙ₋F gebildet, die in der nächsten Stufe mit dem Amin G bis zum vollständigen Verbrauch der Epoxidgruppen reagiert werden. Es ist auch .möglich, die Verbindungen **E** und **G** sowie gegebenenfalls D gemeinsam vorzulegen, und das Epoxid F dazuzugeben. Dies Verfahren ist insbesondere dann bevorzugt, wenn keine der Verbindungen **D** und **E** eine Säuregruppe oder saure Hydroxylgruppe enthält. Die (zahlenmittlere) molare Masse Mₙ des Emulgators DEFG beträgt bevorzugt ca. 400 bis ca. 6000 g/mol, besonders bevorzugt ca. 500 bis 5000 g/mol, und das Verhältnis der gewichtsmittleren molaren Masse M_{w} zur zahlenmittleren molaren Masse Mₙ beträgt bevorzugt zwischen 1,5 und 2,5, besonders bevorzugt zwischen 1,7 und 2,3.

Als Kettenstopper **D** eignen sich Verbindungen mit einer (genügend sauren) Hydroxylgruppe oder einer sekundären Aminogruppe, ausgewählt aus Phenolen, Carbonsäuren, und sekundären aliphatischen Aminen, insbesondere Hydroxylgruppen enthaltenden sekundären aliphatischen Aminen, aliphatischen Hydroxysäuren und ein- oder mehrkernigen Phenolen. Beispiele bevorzugter Verbindungen sind Phenol selbst, die isomeren o-, m- und p-Kresole, 2-Naphthol, 2,4- und 2,6-Xylenol, Diäthanolamin, Diisopropanolamin, Morpholin, N-Methylpiperazin, Essigsäure und Pivalinsäure, Milchsäure und γ-Hydroxybuttersäure.

Geeignete Kettenverlängerer **E** sind bevorzugt Bisphenol **A**, Monoäthanolamin, 2-Äthylhexylamin, Äthylendiamin, 1,4-Diaminobutan und 1,6-Diaminohexan.

Als Di- oder Polyepoxide **F** können Epoxidverbindungen wie auch bereits unter **A** genannt mit mindestens zwei Epoxidgruppen pro Molekül und einem spezifischen Gehalt an Epoxidgruppen von 1,5 bis 6,0, bevorzugt 1,7 bis 5,8 mol/kg eingesetzt werden. Bevorzugt werden Diepoxid-Verbindungen, und unter diesen besonders solche, die von Bisphenol **A,** Bisphenol F und deren Mischungen abgeleitet sind.

Die Amine **G** haben mindestens eine tertiäre und mindestens eine primäre oder mindestens zwei sekundäre Aminogruppen und 4 bis 10 Kohlenstoffatome. Beispiele geeigneter Amine sind N,N-Dimethyl-äthylendiamin, 3-Dimethylamino-1-propylamin,N,N,2,2-Tetramethyl-1,3-propandiamin, N,N,N-Trimethyläthylendiamin, N,N-Bis-(3-aminopropyl)-methylamin, N,N'-Bis-(3-aminopropyl)-piperazin sowie die entsprechenden N-Äthyl-Verbindungen. Besonders bevorzugt werden 3-Dimethylamino-1-propylamin und 3-Diäthylamino-1-propylamin.

Dabei werden Art und Mengen der Edukte im Emulgatorharz DEFG bevorzugt so gewählt, daß die Aminzahl des Emulgatorharzes 5 bis 60, insbesondere 10 bis 40 mg/g beträgt. Dabei ist es sowohl möglich, daß durch die Reaktion mit dem Epoxid F sämtliche Aminwasserstoffatome verbraucht werden; es ist aber auch möglich, die Art und Mengen der Edukte **D, E, F** und **G** so zu wählen, daß noch Aminwasserstoffatome im Emulgatorharz verbleiben, die bei der Härtung des mit diesem Härter **H** zu härtenden Epoxidharzes ebenfalls mit diesem reagieren. In diesem Fall ist es bevorzugt, daß die Art und Mengen der Edukte **D, E, F** und. **G** so gewählt werden, daß der Anteil an der für **DEFG** bestimmten Aminzahl, der nicht von tertiären Aminogruppen herrührt, mindestens 2 mg/g beträgt.

Die Aminzahl ist gemäß DIN 53 176 definiert als der Quotient derjenigen Masse *m*_{KOH} an Kaliumhydroxid, die genausoviel Säure zur Neutralisation verbraucht wie eine zu untersuchende Probe, und der Masse *m*_{B} dieser Probe (Masse des Feststoffes in der Probe bei Lösungen oder Dispersionen); ihre übliche Einheit ist "mg/g".

Die beschriebenen Emulgatorharze **DEFG** können auch als Emulgator für andere, alleine nicht wasserlösliche oder in Wasser dispergierbare Aminhärter eingesetzt werden, dabei ist es bevorzugt, diese Aminhärter im Gemisch mit den Addukten **ABC** einzusetzen. Geeignete selbst nicht wasserlösliche bzw. in Wasser dispergierbare Aminhärter sind beispielsweise Polyamidoamine und Mannichbasen. Bevorzugte Polyamidoamine sind Reaktionsprodukte von Fettsäuren wie Tallölfettsäure mit aliphatischen Polyaminen wie Äthylendiamin, Diäthylentriamin und höheren Polyalkylenpolyaminen, ebenso Polyamide mit Aminoendgruppen aus dimerisierten Fettsäuren oder Gemischen, die dimerisierte Fettsäuren enthalten, und Aminen mit mindestens zwei primären Aminogruppen. Bevorzugte Mannichbasen sind Umsetzungsprodukte von Phenol, Kresolen oder Xylenolen mit Formaldehyd und sekundären aliphatischen Aminen, insbesondere 2-(Dimethylaminomethyl)-phenol und 2,4,6-Tris-(dimethylaminomethyl)phenol. Es ist hier wie bei den Addukten **ABC** möglich, durch Einbau von hydrophilen Gruppen die Wasserverträglichkeit zu erhöhen, wobei jedoch die obigen Bedingungen für die Wasserlöslichkeit bzw. Wasserdispergierbarkeit beachtet werden müssen. Bevorzugt kann die Hydrophilie durch Einbau von Oxyäthylen-Sequenzen oder Mischungen von Oxyäthylen- und Oxypropylen-Sequenzen erhöht werden, wie dies im Fall der Addukte **ABC** durch Modifikation der Epoxidverbindungen **A** mit den Polyalkylenäther-Polyolen **A2** erreicht wird. Es ist gleichfalls möglich, durch Reaktion der reaktiven Aminogruppen mit Epoxidverbindungen, insbesondere Monoepoxiden, die Reaktivität diese Polyamidoamin- oder Mannichbasen-Härter zu reduzieren, wie bei den Addukten **ABC.** Auch eine Reaktion mit Formaldehyd unter Bildung von N-Methylol-Verbindungen ist in allen Fällen möglich.

Mit den in Wasser emulgierten Härter-Zusammensetzungen gemäß der Erfindung ist es möglich, wäßrige Zwei-Komponenten-Epoxidharz-Beschichtungssysteme zu formulieren, die bei Raumtemperatur oder nur geringfügig erhöhter Temperatur rasch härten und zu Beschichtungen mit hervorragendem Korrosionsschutz führen. Die niedrige Härtungstemperatur ist insbesondere interessant für die Beschichtung von großen oder sperrigen Metallteilen, die nicht oder nur mit unverhältnismäßigem Aufwand bei erhöhter Temperatur zum Beispiel in einem Ofen gehärtet werden können.

Die Erfindung wird durch die nachfolgenden Beispiele erläutert.

### Beispiele:

### Emulgatorharz 1:

Eine Mischung von 913 g ®Beckopox EP 140 (Bisphenol-A-Diglycidyläther mit einem spezifischen Gehalt an Epoxidgruppen von 5,56 mol/kg), 211 g Bisphenol A (0,92 mol) und 181 g Phenol (1,92 mol) wurde unter Stickstoff-Atmosphäre auf ca. 110 bis 120 °C erhitzt und solange gerührt, bis eine homogene Mischung entstanden war. Anschließend wurde auf ca. 80 °C gekühlt und 55 g 3-Dimethylamino-l-propylamin (0,54 mol) zugegeben. Die Mischung erwärmte sich dabei, es wurde bis auf 160 °C erhitzt und ca. 4 Stunden gerührt.

Es wurden 1360 g eines Produkts mit einer Aminzahl (tertiäre Aminogruppen) von 22,2 mg/g erhalten, es waren keine Aminwasserstoffatome mehr nachweisbar.

Durch Zugabe von Toluol wurde das Produkt angelöst für die weitere Verarbeitung.

### Emulgatorharz 2:

Eine Mischung von 44 kg Monoäthanolamin (720 mol, 1440 mol Aminwasserstoffatome), 550 kg eines Polyoxypropylen-Diamins (®Jeffamin D 230, zahlenmittlere molare Masse 230 g/mol) und 55 kg 3-Dimethylamino-1-propylamin wurde in einem Kessel vorgelegt; zu dieser Mischung wurde unter Kühlen des Reaktors eine Lösung von 720 kg ®Beckopox EP 140 und 600 kg ®Beckopox EP 301 (Epoxidharz mit einem spezifischen Epoxidgruppengehalt von 2,1 mol/kg) in Toluol zugesetzt, wobei der Festkörper-Massenanteil der Lösung 80 % betrug. Die Zugabegeschwindigkeit wurde so eingestellt, daß die Temperatur des Reaktionsgutes nicht über 125 °C stieg. Nach beendeter Reaktion wurde durch Zugabe von Toluol weiter verdünnt auf einen Festkörper-Massenanteil von 70 %.

### Epoxid-Amin-Addukt 1:

438 g Triäthylentetramin wurde in einem Kolben vorgelegt, eine Lösung von 950 g ®Beckopox EP 301 (Epoxidharz mit einem spezifischen Epoxidgruppengehalt von 2,1 kg/mol in Xylol, Konzentration des Harzes 75 g in 100 g der Lösung in Xylol) wurde bei von 90 auf 130 °C ansteigender Temperatur zudosiert. Nach beendeter Reaktion (Abklingen der Exothermie) wurde auf 250 °C hochgeheizt und das Lösungsmittel mit dem überschüssigen Amin unter vermindertem Druck abdestilliert. Nach Abkühlen auf 120 °C wurde Methoxypropanol zugegeben und der Festkörper-Massenanteil auf 80 % eingestellt. Der spezifische Gehalt an Aminwasserstoffatomen (bezogen auf die Masse des Festharzes) betrug 8 mol/kg.

### Epoxid-Amin-Addukt 2:

In der ersten Stufe wurde ein Addukt aus 1000 g Polyäthylenglykol (Mₙ = 1000 g/mol) und 1800 g ®Beckopox EP 140 (Bisphenol-A-Diglycidyläther mit einem spezifischen Epoxidgruppen-Gehalt von 5,56 mol/kg) unter Verwendung von 7,5 g eines Bortrifluorid-Amin-Komplexes (®Anchor 1040 der Fa. Air Products) als Katalysator hergestellt. Die Temperatur wurde dabei von anfänglich 125 ° C auf 150 ° C gesteigert und gehalten, bis ein spezifischer Epoxidgruppengehalt der Mischung von ca. 2,8 mol/kg erreicht war.

Anschließend wurden 720 g des Produkts der ersten Stufe unter Kühlung zu 400 g Diäthylentriamin zugetropft; dabei wurde die Temperatur durch kontrollierte Zugabe in einem Intervall von 90 bis 130 °C gehalten. Nach Abklingen der exothermen Reaktion wurde die Reaktionsmischung auf 220 °C aufgeheizt; das überschüssige Amin wurde unter vermindertem Druck abdestilliert. Nach Druckausgleich und Abkühlen auf ca. 120 °C wurde die Reaktionsmischung durch Zugabe von Toluol auf einen Festkörper-Massenanteil von 80 % verdünnt. Das Produkt hatte einen spezifischen Gehalt an Aminwasserstoff von 8,3 mol/kg (bezogen auf die Masse des Festharzes).

### Aminhärter 1:

Eine Lösung von 1250 g des Epoxid-Amin-Addukts 1 wurde in einem Reaktor vorgelegt und auf ca. 80 bis 100 °C erwärmt, danach wurden 225 g n-Butylglycidyläther (Stoffmenge der Epoxidgruppen 1,5 mol) langsam zudosiert, sodaß die Temperatur mit Kühlung 110 °C nicht überstieg. Nach Ende der Reaktion wurde ein Volumen der Lösung des Emulgatorharzes 2 entsprechend 495 g Festharz (Massenanteil des Emulgators bezogen auf die Masse des gesamten Festharzes: ca. 25 %) zugesetzt und bei 120 °C während 30 Minuten gut homogenisiert, danach wurde auf ca. 130 bis 140 °C geheizt und die vorhandenen Hilfslösungsmittel möglichst vollständig durch Destillation unter vermindertem Druck abgezogen.

Nach Abkühlen auf 120 °C wurden 200 g Methoxypropanol (= ca. 10 % bezogen auf die Masse aller Festharze) zugesetzt und danach weitere 200 g Wasser zudosiert, bevor bei einer Temperatur von ca. 80 bis 90 °C 20 g Eisessig (ca. 1% bezogen auf die Masse des gesamten Festharzes) zugesetzt wurden. Nach einer Homogenisierphase von 30 Minuten wurde mit weiterem Wasser bei fallender Temperatur dispergiert.

Es wurde ein lagerstabiles, wäßriges Produkt mit einem Festkörper-Massenanteil von 50 % bei einer Viskosität von ca. 10 bis 15 Pa.s (23 °C) erhalten. Der spezifische Gehalt an Aminwasserstoffatomen betrug 5,26 mol/kg (bezogen auf die Masse des Festharzes, auf die Masse der Lösung bezogen ergeben sich 2,6 mol/kg).

### Aminhärter 2:

Eine Lösung von 930 g des Epoxid-Amin-Addukts 2 wurde in einem Reaktor vorgelegt und auf 80 bis 100 ° C erwärmt, danach wurde eine Mischung aus 155 g 2-Äthylhexylglycidyläther (0,7 mol) und 38 g Hexandioldiglycidyläther (Stoffmenge an Epoxidgruppen 0,25 mol) langsam zudosiert, sodaß die Temperatur mit Kühlung 110 °C nicht überstieg. Nach Ende der Reaktion wurde eine Lösung von 285 g des Emulgatorharzes 1 (Massenanteil ca. 20 %, bezogen auf die Masse des gesamten Festharzes) zugesetzt und bei 120 °C während 30 Minuten gut homogenisiert, bevor auf ca. 130 bis 140 ° C geheizt wurde und die vorhandenen Hilfslösungsmittel möglichst vollständig durch Destillation unter vermindertem Druck abgezogen wurden.

Nach Abkühlen auf 120 °C wurden 140 g Methoxypropanol (ca. 10 % der Masse des gesamten Festharzes) zugesetzt und danach 100 g Wasser zudosiert, bevor bei einer Temperatur von ca. 80 bis 90 ° C 30 g Eisessig (ca. 2 % der Masse des gesamten Festharzes) zugesetzt wurden. Nach einer Homogenisierphase von 30 Minuten wurde mit weiterem Wasser bei fallender Temperatur dispergiert.

Es wurde ein lagerstabiles, wäßriges Produkt mit einem Festkörper-Massenanteil von 55 % bei einer Viskosität von 14 bis 18 Pa·s (23 °C) erhalten. Der spezifische Gehalt an Aminwasserstoffatomen betrug 4,76 mol/kg (bezogen auf die Masse des Festharzes; bezogen auf die Masse der Lösung -Lieferform- waren es 2,63 mol/kg).

### Lackformulierung:

Bei Verwendung von scherstabilen wäßrigen Epoxidharz-Dispersionen (zum Beispiel ®Beckopox EP 384w, ®Beckopox VEP 2381w) können die Pigmente sowohl in der Harzkomponente als auch in der Härterkomponente angerieben werden. Zur Erzielung eines höheren Pigment-Bindemittel-Verhältnisses wird jedoch die Dispergierung der verwendeten Pigmente und Füllstoffe in der Harzkomponente bevorzugt.
Entscheidend für die Korrosionsschutzeigenschaften des erfindungsgemäßen 2K-Systems ist die Menge an eingesetztem Härter, die jedoch für jeden Aminhärter speziell optimiert werden muß. Generell haben sich für Primer-Rezepturen 60 bis 80 % der aufgrund der Stöchiometrie berechneten Härtermenge als optimal für die Korrosionsschutz-Eigenschaften erwiesen.

### Anwendungstechnische Ergebnisse

Gemäß den Angaben in der nachfolgenden Tabelle wurden mit Mischungen der Epoxidharz-Dispersion ®Beckopox EP 384 w (Epoxid-Festharz-Dispersion "Typ 1", spezifischer Epoxidgruppen-Gehalt 1,02 mol/kg, bezogen auf die Masse der Dispersion; und 1,92 mol/kg bezogen auf die Masse des Festharzes) und der genannten Härter sandgestrahlte Eisenbleche beschichtet mit einer Trockenfilm-Schichtdicke von 50 µm. Die Bleche wurden nach der Applikation sieben Tage bei Raumtemperatur (20 ° C) gelagert.

In der Tabelle werden die Ergebnisse nach 1000 h Salzsprühtest (DIN 50021) bzw. Feuchtschranktest (DIN 50017) aufgeführt.

**Tabelle: Korrosionsschutz-Eigenschaften der Lacke**

| | | | | |
|---|---|---|---|---|
| | Lack 1 | Lack 2 | Lack 3 | Lack 4 |
| Epoxidharz-Dispersion | 47,0 g (n _{EP} = 48 mmol) | | | |
| Aminhärter 1 | 13,7 g | | 18,2 g | |
| | n_{H} = 36 mmol | | n_{H} = 48 mmol | |
| Aminhärter 2 | | 13,7 g | | 18,2 g |
| | | n_{H} = 36 mmol | | n_{H} = 48 mmol |
| Vernetzungsgrad | 75 % | 75 % | 100 % | 100 % |
| Unterwanderung am Schnitt | 2 mm | 2 mm | Ablösung | Ablösung |
| Gitterschnitt * | 0 | 0 | 5 | 5 |
| Bläschenbildung * | 0 bis 1 | 0 bis 1 | 5 | 5 |

| | | | | |
|---|---|---|---|---|
| Bewertung: 0 bester Wert 5 schlechtester Wert | | | | |
| n_{EP}: Stoffmenge der Epoxidgruppen | | | | |
| n_{H}: Stoffmenge der Aminwasserstoffatome | | | | |

## Patentansprüche

1. Wasserverdünnbare Aminhärter **H** für wäßrige Zweikomponenten-Epoxidharz-Systeme, **dadurch gekennzeichnet, daß** sie eine Kombination eines Addukts **ABC** mit einem Emulgator **DEFG** enthalten, wobei das Addukt **ABC** in Wasser unlöslich ist und erhältlich ist durch Umsetzung eines Polyepoxids **A** mit
I. einem Umsetzungsprodukt aus einem Amin **B** und einem Monoepoxid **C** oder
II. einem Amin **B** und anschließende Umsetzung mit einem Monoepoxid C,
wobei die Menge an Amin **B** so gewählt ist, daß die Anzahl der an Stickstoff gebundenen **H-**Atome in einem 2- bis 10-fachen Überschuß, bezogen auf die Anzahl der Epoxidgruppen in **A,** vorliegt, und der Emulgator **DEFG** erhältlich ist durch Umsetzung von Di- oder Polyepoxiden **F** mit gegenüber Epoxiden mindestens difunktionellen Verbindungen **E,** gegebenenfalls mit gegenüber Epoxiden monofunktionellen Verbindungen **D**, und Aminen **G,** die mindestens eine tertiäre und mindestens eine primäre oder mindestens zwei sekundäre Aminogruppen aufweisen.

2. Wasserverdünnbare Aminhärter nach Anspruch 1, **dadurch gekennzeichnet, daß** der Massenanteil an Emulgatorharz **DEFG,** bezogen auf die Summe der Massen der gelösten oder dispergierten Harze (Härter **ABC** und Emulgator **DEFG)** zwischen 10 und 40 % liegt.

3. Wasserverdünnbare Aminhärter nach Anspruch 1, **dadurch gekennzeichnet, daß** der spezifische Gehalt an Aminwasserstoffatomen in **ABC** 3 bis 8 mol/kg beträgt.

4. Wasserverdünnbare Aminhärter nach Anspruch 1, **dadurch gekennzeichnet, daß** die Verbindungen **A** ausgewählt werden aus den Diepoxiden Bisphenol **A -** Diglycidyläther, Bisphenol **F -** Diglycidyläther, den Diglycidyläthern von Dihydroxydiphenylsulfon, Dihydroxydiphenyl und Dihydroxydiphenyläther, sowie Neopenrylglykol-Diglycidyläther, 1,4-Butandiol-Diglycidyläther, und 1,6-Hexandiol-Diglycidyläther.

5. Wasserverdünnbare Aminhärter nach Anspruch 1, **dadurch gekennzeichnet, daß** die Amine B mindestens zwei primäre und/oder sekundäre Aminogruppen aufweisen, wobei die Aminogruppen jeweils an aliphatische Kohlenstoffatome gebunden sind.

6. Wasserverdünnbare Aminhärter nach Anspruch 1, **dadurch gekennzeichnet, daß** die Amine B ausgewählt sind aus Äthylendiamin, 1,3-Diaminopropan, 1,4-Diaminobutan und 1,6-Diaminohexan, Bis(3-aminopropyl)amin, Bis(4-aminobutyl)amin und Bis(6-aminohexyl)amin, Diäthylentriamin, Triäthylentetramin und Tetraäthylenpentamin.

7. Wasserverdünnbare Aminhärter nach Anspruch 1, **dadurch gekennzeichnet, daß** die Epoxidkomponente C ausgewählt ist aus den Glycidyläthern von n-Butanol, n-Hexanol und 2-Äthylhexanol und den Glycidylestern von linearen und verzweigten aliphatischen Carbonsäuren mit 2 bis 20 Kohlenstoffatomen.

8. Wasserverdünnbare Aminhärter nach Anspruch 1, **dadurch gekennzeichnet, daß** die bei der Herstellung des Emulgatorharzes verwendeten Epoxide **F** ausgewählt sind aus Diepoxiden abgeleitet von Bisphenol **A,** Bisphenol **F** und deren Mischungen.

9. Wasserverdünnbare Aminhärter nach Anspruch 1, **dadurch gekennzeichnet, daß** die bei der Herstellung des Emulgatorharzes verwendeten Amine G ausgewählt sind aus 3-Dimethylamino-1-propylamin und 3-Diäthylamino-l-propylamin.

10. Wasserverdünnbare Aminhärter nach Anspruch 1, **dadurch gekennzeichnet, daß** bei der Herstellung des Emulgatorharzes Kettenstopper **D** eingesetzt werden und diese ausgewählt sind aus Phenol, o-, m- und p-Kresol, 2-Naphthol, 2,4- und 2,6-Xylenol, Diäthanolamin, Diisopropanolamin, Morpholin, N-Methylpiperazin, Essigsäure und Pivalinsäure, Milchsäure und γ-Hydroxybuttersäure.

11. Wasserverdünnbare Aminhärter nach Anspruch 1, **dadurch gekennzeichnet, daß** die bei der Herstellung des Emulgatorharzes verwendeten Kettenverlängerer **E** ausgewählt sind aus Bisphenol **A,** Monoäthanolamin, Z-Atlzylhexylamin, Äthylendiamin, 1,4-Diaminobutan und 1,6-Diaminohexan.

12. Wasserverdünnbare Aminhärter nach Anspruch 1, **dadurch gekennzeichnet, daß** die Aminzahl des Emulgators **DEFG** 5 bis 60 mg/g beträgt.

13. Wasserverdünnbare Aminhärter nach Anspruch 1, **dadurch gekennzeichnet, daß** der Anteil an der für den Emulgator **DEFG** bestimmten Aminzahl, der nicht von tertiären Aminogruppen herrührt, mindestens 2 mg/g beträgt.

14. Verfahren zur Herstellung von wasserverdünnbaren Aminhärtern **H** für wäßrige Epoxidharz-Dispersionen, **dadurch gekennzeichnet, daß** ein wasserunlösliches Reaktionsprodukt **ABC** durch Umsetzung eines Polyepoxids **A** mit
I. einem Umsetzungsprodukt aus einem Amin **B** und einem Monoepoxid **C** oder
II. einem Amin **B** und anschließende Umsetzung mit einem Monoepoxid **C** hergestellt wird,
wobei die Menge an Amin **B** so gewählt wird, daß die Anzahl der an Stickstoff gebundenen H-Atome die der Epoxidgruppen um das 2- bis 10-fache übertrifft, und das Reaktionsprodukt **ABC** in Wasser emulgiert wird unter Zusatz eines Emulgators **DEFG,** der durch Umsetzung von Di- oder Polyepoxiden **F** mit gegenüber Epoxiden monofunktionellen Verbindungen **D** und gegenüber Epoxiden mindestens difunktionellen Verbindungen **E** und Aminen **G** hergestellt wird, die mindestens eine tertiäre und mindestens eine primäre oder mindestens zwei sekundäre Aminogruppen aufweisen.

15. Verfahren nach Anspruch 14, **dadurch gekennzeichnet, daß** das Reaktionsprodukt **ABC** durch Umsetzung eines Polyepoxids **A** mit einem Umsetzungsprodukt aus einem Amin **B** und einer Epoxidkomponente **C** hergestellt wird.

16. Verfahren nach Anspruch 14, **dadurch gekennzeichnet, daß** das Reaktionsprodukt **ABC** durch Umsetzung eines Polyepoxids **A** mit einem Amin **B** bis zum vollständigen Verbrauch der Epoxidgruppen und anschließende Umsetzung mit einer Epoxidkomponente C hergestellt wird.

17. Verfahren nach Anspruch 14, **dadurch gekennzeichnet, daß** die Epoxide **A** vor ihrer Umsetzung mit dem Umsetzungsprodukt aus Amin **B** und Epoxidkomponente **C** bzw. mit dem Amin **B** durch Reaktion mit Polyalkylenäthern **A2** modifiziert werden.

18. Verfahren nach Anspruch 15, **dadurch gekennzeichnet, daß** zunächst das Amin B mit einem Teil **C1** der Epoxidkomponente **C** umgesetzt wird, dies Zwischenprodukt **C1B** mit dem Polyepoxid **A** unter Verbrauch aller Epoxidgruppen von **A** umgesetzt wird, und anschließend die Reaktion mit dem Rest **C2** der Epoxidkomponente C durchgeführt wird.

19. Verfahren nach Anspruch 14, **dadurch gekennzeichnet, daß** der Emulgator **DEFG** durch zweistufige Umsetzung hergestellt wird, wobei in der ersten Stufe die Komponenten **E** und **F** sowie gegebenenfalls **D** umgesetzt werden, und in der zweiten Stufe die Reaktion mit dem Amin G erfolgt.

20. Verfahren nach Anspruch 14, **dadurch gekennzeichnet, daß** der Emulgator **DEFG** durch einstufige Umsetzung hergestellt wird, indem die Komponente **E** und gegebenenfalls **D** zusammen mit dem Amin **G** vorgelegt werden und das Epoxid **F** anschließend zugesetzt wird.

21. Verwendung des gemäß dem Verfahren von Anspruch 14 hergestellten Emulgators **DEFG** zum Herstellen von Härtern für wäßrige Epoxidharz-Dispersionen, wobei nicht wasserlösliche oder wasserdispergierbare basische Härter gemeinsam mit dem Emulgatorharz **DEFG** in Wasser dispergiert werden.

22. Verwendung nach Anspruch 21, **dadurch gekennzeichnet, daß** die basischen Härter ausgewählt sind aus Addukten **ABC** von Epoxidverbindungen und Aminen, sowie aus Polyamidoaminen und Mannichbasen.

23. Verwendung von wasserverdünnbaren Aminhärtern nach Anspruch 1 zur Herstellung von wäßrigen Zwei-Komponentenbeschichtungsmitteln, wobei die wasserverdünnbaren Härter mit wäßrigen Epoxidharzdispersionen unmittelbar vor Gebrauch gemischt werden.

24. Wäßrige Zwei-Komponenten-Beschichtungsmittel, enthaltend wäßrige Härter nach Anspruch 1 und wäßrige Epoxidharz-Dispersionen.

## Claims

1. A water dilutable amine curing agent **H** for aqueous two component epoxy resin systems, comprising a combination of an adduct **ABC** with an emulsifier **DEFG,** said adduct **ABC** being insoluble in water and obtainable by reacting a polyepoxide **A** with
I. a reaction product of an amine **B** and a monoepoxide **C,** or
II. an amine **B** and subsequent reaction with a monoepoxide **C,**
the amount of amine **B** being chosen such that the number of nitrogen-attached hydrogen atoms exceeds the number of epoxide groups in **A** by a factor of from 2 to 10, and the emulsifier **DEFG** being obtainable by reacting diepoxides or polyepoxides **F** with compounds **E** that are at least difunctional with respect to epoxides, optionally with compounds **D** that are monofunctional with respect to epoxides, and with amines **G** which contain at least one tertiary and at least one primary or at least two secondary amino group(s).

2. The water dilutable amine curing agent as claimed in claim 1, wherein the mass fraction of emulsifier resin **DEFG,** based on the sum of the masses of the dissolved or dispersed resins (curing agent **ABC** and emulsifier **DEFG),** is between 10 and 40%.

3. The water dilutable amine curing agent as claimed in claim 1, wherein the specific amount of amine hydrogen atoms in **ABC** is from 3 to 8 mol/kg.

4. The water dilutable amine curing agent as claimed in claim 1, wherein the compounds **A** are selected from the diepoxides bisphenol A diglycidyl ether, bisphenol F diglycidyl ether, the diglycidyl ethers of dihydroxydiphenyl sulfone, dihydroxybiphenyl, and dihydroxydiphenyl ether, and also neopentyl glycol diglycidyl ether, 1,4-butanediol diglycidyl ether, and 1,6-hexanediol diglycidyl ether.

5. The water dilutable amine curing agent as claimed in claim 1, wherein the amines **B** contain at least two primary and/or secondary amino groups, the amino groups each being attached to aliphatic carbon atoms.

6. The water dilutable amine curing agent as claimed in claim 1, wherein the amines **B** are selected from ethylenediamine, 1,3-diaminopropane, 1,4-diaminobutane, and 1,6-diaminohexane, bis(3-aminopropyl)amine, bis (4-aminobutyl) amine, and bis(6-aminohexyl)amine, diethylenetriamine, triethylenetetramine, and tetraethylenepentamine.

7. The water dilutable amine curing agent as claimed in claim 1, wherein the epoxide component C is selected from the glycidyl ethers of n-butanol, n-hexanol, and 2-ethylhexanol, and the glycidyl esters of linear and branched aliphatic carboxylic acids having 2 to 20 carbon atoms.

8. The water dilutable amine curing agent as claimed in claim 1, wherein the epoxides **F** used in preparing the emulsifier resin are selected from diepoxides derived from bisphenol A, bisphenol F, and mixtures thereof.

9. The water dilutable amine curing agent as claimed in claim 1, wherein the amines **G** used in preparing the emulsifier resin are selected from 3-dimethylamino-1-propylamine and 3-diethylamino-l-propylamine.

10. The water dilutable amine curing agent as claimed in claim 1, wherein chain terminators **D** are used in preparing the emulsifier resin and are selected from phenol, o-, m- and p-cresol, 2-naphthol, 2,4-and 2,6-xylenol, diethanolamine, diisopropanolamine, morpholine, N-methylpiperazine, acetic and pivalic acids, lactic acid, and γ-hydroxybutyric acid.

11. The water dilutable amine curing agent as claimed in claim 1, wherein the chain extenders **E** used in preparing the emulsifier resin are selected from bisphenol **A,** monoethanolamine, 2-ethylhexylamine, ethylenediamine, 1,4-diaminobutane, and 1,6-diaminohexane.

12. The water dilutable amine curing agent as claimed in claim 1, wherein the amine number of the emulsifier **DEFG** is from 5 to 60 mg/g.

13. The water dilutable amine curing agent as claimed in claim 1, wherein the fraction of the amine number found for the emulsifier **DEFG** that does not originate from tertiary amino groups is at least 2 mg/g.

14. A process for preparing a water dilutable amine curing agent **H** for aqueous epoxy resin dispersions, which comprises preparing a water-insoluble reaction product **ABC** by reacting a polyepoxide **A** with
I. a reaction product of an amine **B** and a monoepoxide **C,** or
II. an amine **B** and subsequent reaction with a monoepoxide **C,**
the amount of amine B being chosen such that the number of nitrogen-attached hydrogen atoms exceeds that of the epoxide groups by a factor of from 2 to 10, and emulsifying the reaction product **ABC** in water with the addition of an emulsifier **DEFG** which is prepared by reacting diepoxides or polyepoxides **F** with compounds **D** that are monofunctional with respect to epoxides and with compounds **E** that are at least difunctional with respect to epoxides and with amines G which contain at least one tertiary and at least one primary or at least two secondary amino group(s).

15. The process as claimed in claim 14, wherein the react-ion product **ABC** is prepared by reacting a polyepoxide **A** with a reaction product of an amine **B** and an epoxide component **C.**

16. The process as claimed in claim 14, wherein the reaction product **ABC** is prepared by reacting a polyepoxide **A** with an amine **B** until all of the epoxide groups have been consumed and then reacting it with an epoxide component **C.**

17. The process as claimed in claim 14, wherein before being reacted with the reaction product of amine **B** and epoxide component **C** and/or with the amine **B** the epoxides **A** are modified by reaction with polyalkylene ethers **A2.**

18. The process as claimed in claim 15, wherein first of all the amine **B** is reacted with a portion **C1** of the epoxide component **C,** this intermediate **C1B** is reacted with the polyepoxide **A,** with all of the epoxide groups of **A** being consumed, and then the reaction with the remainder **C2** of the epoxide component **C** is carried out.

19. The process as claimed in claim 14, wherein the emulsifier **DEFG** is prepared by two-stage reaction, reacting in the first stage the components **E** and **F** and also, where appropriate, **D**, and in the second stage carrying out the reaction with the amine **G.**

20. The process as claimed in claim 14, wherein the emulsifier **DEFG** is prepared by one-stage reaction, initially introducing component **E** and, where appropriate, **D** together with the amine **G** and then adding the epoxide **F.**

21. The use of the emulsifier **DEFG** prepared in accordance with the process of claim 14 for preparing curing agents for aqueous epoxy resin dispersions, where water insoluble or water indispersible basic curing agents are dispersed in water together with the emulsifier resin **DEFG.**

22. The use as claimed in claim 21, wherein the basic curing agents are selected from adducts **ABC** of epoxide compounds and amines, and from polyamidoamines and Mannich bases.

23. The use of a water dilutable amine curing agent as claimed in claim 1 for preparing aqueous two component coating compositions, the water dilutable curing agent being mixed with aqueous epoxy resin dispersions immediately before use.

24. An aqueous two component coating composition comprising an aqueous curing agent as claimed in claim 1 and aqueous epoxy resin dispersions.

## Revendications

1. Durcisseurs d'amines H diluables dans l'eau pour des systèmes aqueux de résine époxyde à deux composants, **caractérisés en ce qu'**ils contiennent une combinaison d'un adduit ABC avec un émulsifiant DEFG, l'adduit ABC étant insoluble dans l'eau et est susceptible d'être obtenu par réaction d'un polyépoxyde A avec
I. un produit de réaction d'une amine B avec un monoépoxyde C ou
II. une amine B et réaction subséquente avec un monoépoxyde C,
la quantité d'amine B étant choisie de telle manière que le nombre des atomes H liés à l'azote se trouve en excès de 2 à 10 fois par rapport au nombre des groupes époxydes dans A, et l'émulsifiant DEFG est susceptible d'être obtenu par réaction de di- ou polyépoxydes F avec des composés E au moins bifonctionnels vis à vis des époxydes, le cas échéant avec des composés D monofonctionnels vis à vis des époxydes, et des amines G, qui présentent au moins un groupe amine tertiaire et au moins un groupe amine primaire ou au moins deux groupes amine secondaires.

2. Durcisseurs d'amines diluables dans l'eau selon la revendication 1, **caractérisés en ce que** la portion massique de résine émulsifiante DEFG, par rapport à la somme des masses des résines dissoutes ou dispersées (durcisseur ABC et émulsifiant DEFG) est situé entre l 0 et 40 %.

3. Durcisseurs d'amines diluables dans l'eau selon la revendication 1, **caractérisés en ce que** la teneur spécifique en atomes d'hydrogène de type aminé dans ABC s'élève de 3 à 8 mol/kg.

4. Durcisseurs d'amines diluables dans l'eau selon la revendication 1, **caractérisés en ce que** les composés A sont choisis parmi les diépoxydes bisphénol A - éther de diglycidyle, bisphénol F - éther de diglycidyle, les éthers de diglycidyle de la dihydroxydiphénylsulfone, le dihydroxydiphényle et l'éther de dihydroxydiphényle, ainsi que le néopentylglycol - éther de diglycidyle, le 1,4-butanediol - éther de diglycidyle, et le 1,6-hexanediol - éther de diglycidyle.

5. Durcisseurs d'amines diluables dans l'eau selon la revendication 1, **caractérisés en ce que** les amines B présentent au moins deux groupes amine primaire et/ou amine secondaire, les groupes amine étant liés chacun à des atomes de carbone aliphatiques.

6. Durcisseurs d'amines diluables dans l'eau selon la revendication 1, **caractérisés en ce que** les amines B sont choisies parmi l'éthylènediamine, le 1,3-diaminopropane, le 1,4-diaminobutane et le 1,6-diaminohexane, la bis-(3-aminopropyl)amine, la bis-(4-aminobutyl)amine et la bis-(6-aminohexyl)amine, la diéthylènetriamine, la triéthylènetétramine et la tétraéthylènepentamine.

7. Durcisseurs d'amines diluables dans l'eau selon la revendication 1, **caractérisés en ce que** le composé époxyde C est choisi parmi les éthers de glycidyle du n-butanol, n-hexanol et 2-éthylhexanol et les esters glycidiques d'acides carboxyliques aliphatiques linéaires et ramifiés ayant 2 à 20 atomes de carbone.

8. Durcisseurs d'amines diluables dans l'eau selon la revendication 1, **caractérisés en ce que** les époxydes F utilisés pour la fabrication de la résine émulsifiante sont choisis parmi des diépoxydes dérivés de bisphénol A, bisphénol F et leur mélanges.

9. Durcisseurs d'amines diluables dans l'eau selon la revendication 1, **caractérisés en ce que** les amines G utilisés pour la fabrication de la résine émulsifiante sont choisies parmi la 3-diméthylamino-1-propylamine et la 3-diéthylamino-1-propylamine.

10. Durcisseurs d'amines diluables dans l'eau selon la revendication 1, **caractérisés en ce que** des réducteurs de chaîne D sont utilisés pendant la fabrication de la résine émulsifiante et **en ce que** ceux-ci sont choisis parmi le phénol, le o-, m- et p-crésol, le 2-naphtol, le 2,4- et le 2,6-xylénol, la diéthanolamine, la diisopropanolamine, la morpholine, la N-méthylpipérazine, l'acide acétique et l'acide pivalique, l'acide lactique et l'acide γ-hydroxybutyrique.

11. Durcisseurs d'amines diluables dans l'eau selon la revendication 1, **caractérisés en ce que** les extenseurs de chaîne E utilisés pour la fabrication de la résine émulsifiante sont choisis parmi le bisphénol A, la monoéthanolamine, la 2-éthylhexylamine, l'éthylènediamine, le 1,4-diaminobutane et le 1,6-diaminohexane.

12. Durcisseurs d'amines diluables dans l'eau selon la revendication 1, **caractérisés en ce que** l'indice d'amine de l'émulsifiant DEFG s'élève de 5 à 60 mg/g.

13. Durcisseurs d'amines diluables dans l'eau selon la revendication 1, **caractérisés en ce que** la portion d'indice d'amine déterminé pour l'émulsifiant DEFG qui ne provient pas d'amines tertiaires, s'élève à au moins 2 mg/g.

14. Procédé de fabrication de durcisseurs d'amines H diluables dans l'eau pour des dispersions de résine époxyde aqueuses, **caractérisé en ce qu'**un produit réactionnel insoluble dans l'eau ABC est fabriqué par réaction d'un polyépoxyde A avec
I. un produit de réaction d'une amine B avec un monoépoxyde C ou
II. une amine B et la réaction subséquente avec un monoépoxyde C,
la quantité d'amine B étant choisie de telle manière que le nombre des atomes H liés à l'azote est supérieur de 2 à 10 fois à celui des groupes époxydes, et le produit réactionnel ABC est émulsifié dans l'eau avec ajout d'un émulsifiant DEFG qui est fabriqué par réaction de di- ou polyépoxydes F avec des composés D monofonctionnels vis à vis des époxydes et avec des composés E au moins bifonctionnels vis à vis des époxydes et des amines G, qui présentent au moins un groupe amine tertiaire et au moins un groupe amine primaire ou au moins deux groupes amines secondaires.

15. Procédé selon la revendication 14, **caractérisé en ce que** le produit réactionnel ABC est fabriqué par réaction d'un polyépoxyde A avec un produit de réaction d'une amine A avec un composant époxyde C.

16. Procédé selon la revendication 14, **caractérisé en ce que** le produit réactionnel ABC est fabriqué par réaction d'un polyépoxyde A avec une amine B jusqu'à la consommation complète des groupes époxydes et réaction subséquente avec un composant époxyde C.

17. Procédé selon la revendication 14, **caractérisé en ce que** les époxydes A sont modifiés avant leur réaction avec le produit de réaction de l'amine B avec le composant époxyde C ou avec l'amine B par réaction avec des éthers de polyalkylène A2.

18. Procédé selon la revendication 15, **caractérisé en ce que** l'on fait réagir d'abord l'amine B avec une partie C1 du composant époxyde C, ce produit intermédiaire C1B est laissé réagir avec un polyépoxyde A avec consommation de tous les groupes époxydes de A, et la réaction est ensuite effectuée avec le reste C2 du composant époxyde C.

19. Procédé selon la revendication 14, **caractérisé en ce que** l'émulsifiant DEFG est fabriqué par réaction en deux étapes, les composants E et F ainsi que le cas échéant D, étant faits réagir dans la première étape, et la réaction avec l'amine G se produisant dans la deuxième étape.

20. Procédé selon la revendication 14, **caractérisé en ce que** l'émulsifiant DEFG est fabriqué par réaction à une étape, dans laquelle les composants E et le cas échéant D sont placés simultanément avec l'amine G et l'époxyde F est ensuite ajouté.

21. Utilisation de l'émulsifiant DEFG fabriqué selon le procédé de la revendication 14 pour fabriquer des durcisseurs pour des dispersions de résine époxyde, des durcisseurs basiques non solubles dans l'eau ou dispersibles dans l'eau étant dispersés dans l'eau conjointement avec la résine émulsifiante DEFG.

22. Utilisation selon la revendication 21, **caractérisée en ce que** les durcisseurs basiques sont choisis parmi des adduits ABC de composés époxydes et d'amines, ainsi que de polyamidoamines et de bases de Mannich.

23. Utilisation de durcisseurs d'amine diluables dans l'eau selon la revendication 1 pour la fabrication d'agents de revêtement aqueux à deux composants, les durcisseurs diluables dans l'eau étant mélangés avec des dispersions de résine époxyde aqueuses immédiatement avant consommation.

24. Agents de revêtement aqueux à deux composants, contenant des durcisseurs aqueux selon la revendication 1 et des dispersions de résine époxyde aqueuses.
